# EUROPEAN PATENT APPLICATION

(11) **EP 2 669 808 A1**
(43) Date of publication of application: **04.12.2013**
(21) Application number: 11856713.0
(22) Date of filing: 26.01.2011
(51) Int. Cl.: G06F 13/00

(54) **MANAGEMENT DEVICE, MANAGEMENT METHOD, AND MANAGEMENT PROGRAM**

(71) Applicant: Fujitsu Limited, Kawasaki-shi, Kanagawa 211-8588 (JP)
(72) Inventor: TAMURA, Naohiro, Kawasaki-shi Kanagawa 211-8588 (JP)
(74) Representative: Schultes, Stephan
(86) International application number: PCT/JP2011/051517
(87) International publication number: WO 2012/101785

(57) **Abstract**

A node selecting unit (m41) in a management node (N1) selects a backup node for the management node from nodes (N2 to N4) in an overlay network by using the management range to which the node belongs, the volume of data, and an operation time as an index. A data replicating unit (m42) replicates management information to the backup node. If the management node stops, a switching unit (m43) switches the backup node to the management node. Consequently, it is possible to distribute loads of managing network systems and to improve scalability and reliability.

## Description

### Field

The embodiment discussed herein is directed to a management device, a management method, and a management program.

### Background Art

When large-scale network systems are managed, it is conventional to use a technology that hierarchizes the operation management managers which are devices for operation management. An example of such management used in a large-scale system environment includes the operation management of a distributed computer system, such as a large-scale data center.

Furthermore, there is a known technology, for managing networks, that uses an overlay network, which is built on top of existing networks, creates and changes routing tables on the basis of information related to network failures.

Furthermore, there is a method that guarantees, in a network constituted by multiple terminals, the order of events by allocating the role referred to as a master to a terminal. There is also a known abnormality recovery method in which, when an abnormality is detected in a terminal that has the role of a master, a terminal listed at the top in a master candidate list, in which the candidates are listed in the order they are received, succeeds to the role of master terminal.

### Citation List

### Patent Literature

Patent Literature1: Japanese Laid-open Patent Publication No. 2005-275539
Patent Literature2: Japanese Laid-open Patent Publication No. 2008-311715

### Summary

### Technical Problem

If operation management managers are hierarchized in order to perform operation management on a network, such as a large-scale data center, processes may possibly be delayed because loads are concentrated on a particular manager. If a high performance server is provided to handle the concentrated loads, the cost increases. Furthermore, in the configuration in which managers are hierarchized, a manager becomes a single point of failure (SPOF) and, therefore, fault tolerance is reduced.

Accordingly, the present invention has been conceived in light of the circumstances described above, and an object thereof is to distribute the loads of managing the network systems and to improve scalability and reliability.

### Solution to Problem

A management device, a management method, and a management program disclosed herein selects a backup node for a management node, from a plurality of nodes in a network formed from a plurality of networks by a specific rule based on multiple indexes that include at least one of the management range to which the node belongs to, the volume of data, and an operation time. The device, the method, and the program disclosed herein replicates management information to the backup node, and switches, when the management node stops, the backup node to the management node.

### Advantageous Effects of Invention

According to an aspect of a management device, a management method, and a management program, it is possible to distribute loads across network systems to manage them and to improve their scalability and reliability.

### Brief Description of Drawings

FIG. 1 is a schematic diagram illustrating a management system according to an embodiment.
FIG. 2 is a schematic diagram illustrating a network according to the embodiment.
FIG. 3 is a schematic diagram illustrating the configuration of a management device according to the embodiment.
FIG. 4 is a schematic diagram illustrating a management program.
FIG. 5 is a schematic diagram illustrating hierarchical management.
FIG. 6 is a schematic diagram illustrating the relationship between the hardware of a server and the management program.
FIG. 7 is a schematic diagram illustrating an overlay network.
FIG. 8 is a table illustrating a specific example of a definition of a hash table.
FIG. 9 is a table illustrating a specific example of a self node table t2 illustrated in FIG. 3.
FIG. 10 is a table illustrating a specific example of a domain table t3 illustrated in FIG. 3.
FIG. 11 is a table illustrating a specific example of a node management table t4 illustrated in FIG. 3.
FIG. 12 is a table illustrating a specific example of a routing table t5 illustrated in FIG. 3.
FIG. 13 is a flowchart illustrating the flow of the operation of a process performed by a backup processing unit m40.

### Description of Embodiments

In the following, a preferred embodiment of a management device, a management method, and a management program according to the present invention will be described in detail below with reference to the accompanying drawings. The embodiment should not be interpreted as limiting the technology disclosed herein. Embodiment

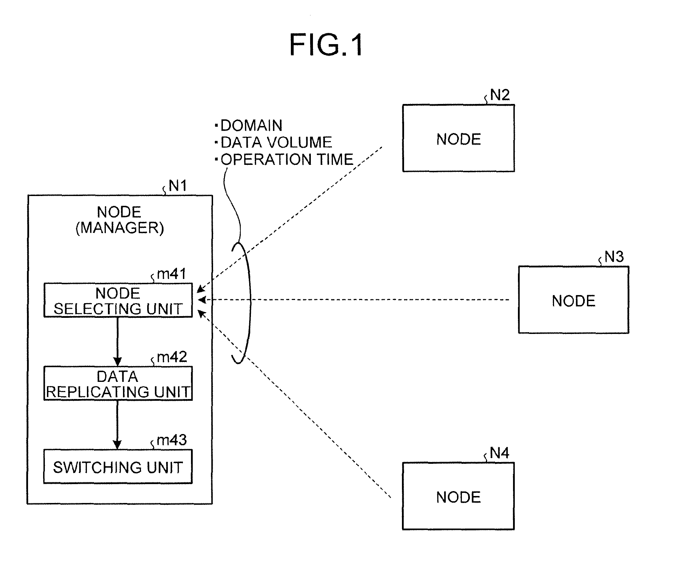

FIG. 1 is a schematic diagram illustrating a management system according to an embodiment. A node N1 illustrated in FIG. 1 is a management node (manager) that manages an overlay network that includes nodes N2 to N4. The node N1 includes a node selecting unit m41, a data replicating unit m42, and a switching unit m43. Similarly to the node N1, the nodes N2 to N4 each also include the node selecting unit m41, the data replicating unit m42, and the switching unit m43 (not illustrated).

The node selecting unit m41 acquires, from the nodes N2 to N4, the management range to which the node belongs, the volume of data, and the operation time and uses them as an index to select a backup node for the management node.

The data replicating unit m42 replicates management information to the backup node selected by the node selecting unit m41, and if the current management node stops, the switching unit m43 switches the backup node to a management node.

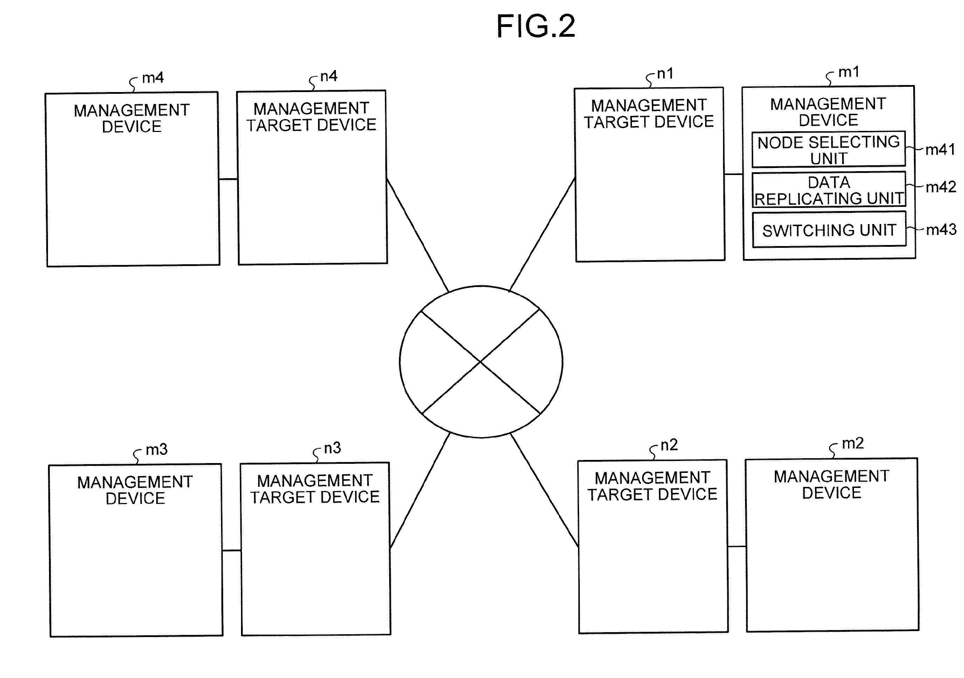

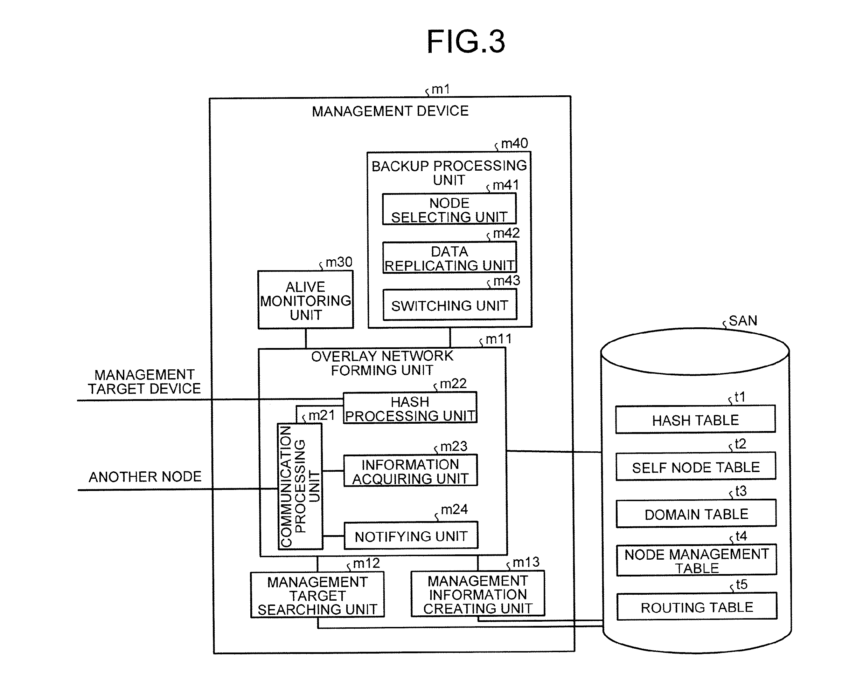

FIG. 2 is a schematic diagram illustrating a network according to the embodiment. FIG. 3 is a schematic diagram illustrating the configuration of a management device according to the embodiment. As illustrated in FIG. 2, the management target devices n1 to n4 are connected via a network. This network is a network that will be monitored.

A management device m1 is connected to the management target device n1, a management device m2 is connected to the management target device n2, and a management device m3 is connected to the management target device n3. By using network interfaces of the management target devices n1 to n4, the management devices m1 to m4 form an overlay network with respect to the network to which the management target devices n1 to n4 belong. The management devices m1 to m4 function as nodes of the overlay network and can communicate with each other.

The management devices m1 to m4 have the same configuration; therefore, only a description will be given of the management device m1 as an example. The management device m1 includes the node selecting unit m41, the data replicating unit m42, and the switching unit m43.

As illustrated in FIG. 3, the management device m1 includes an overlay network forming unit m11, a management target searching unit m12, a management information creating unit m13, an alive monitoring unit m30, and a backup processing unit m40. Furthermore, the management device m1 includes, inside the backup processing unit m40, the node selecting unit m41, the data replicating unit m42, and the switching unit m43. Furthermore, the management device m1 is connected to a storage area network (SAN) and allows the SAN to retain various kinds of information, which will be described later.

The overlay network forming unit m11 is a processing unit that forms an overlay network with respect to a network targeted for management and includes a communication processing unit m21, a hash processing unit m22, an information acquiring unit m23, and a notifying unit m24.

The communication processing unit m21 performs a process for communicating with another node that is arranged in a network in which the management target device n1 participates as a node. The hash processing unit m22 obtains a hash value from information that is acquired by the communication processing unit m21 from another node or from information on the management target device and uses the obtained hash value as a key for an overlay network. The information acquiring unit m23 is a processing unit that acquires information from another node in the overlay network via the communication processing unit m21. The notifying unit m24 is a processing unit that sends information as a notification to another node in the overlay network via the communication processing unit m21.

The management target searching unit m12 performs a process of searching the overlay network formed by the overlay network forming unit m11 for a node belonging in the same management range as that of the node itself, i.e., the management target device to which the management device m1 is directly connected.

The management information creating unit m13 creates management information in which the node searched for by the management target searching unit m12 is used as a node targeted for management.

The alive monitoring unit m30 is a processing unit that monitors whether a node that will be monitored is alive or death. The backup processing unit m40 includes the node selecting unit m41, the data replicating unit m42, and the switching unit m43; selects a backup node; replicates data; and switches nodes on the basis of the result of the monitoring performed by the alive monitoring unit m30.

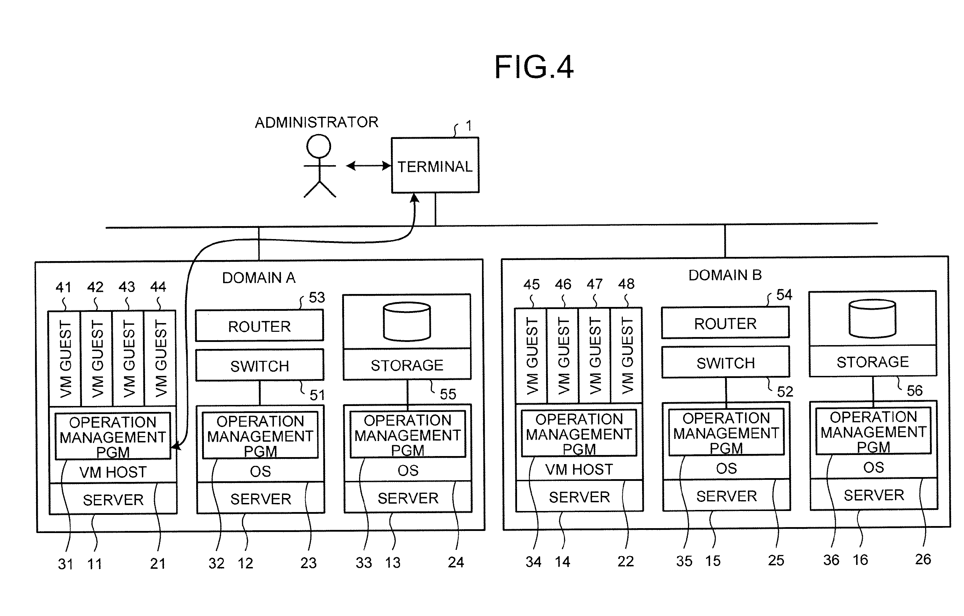

The management device m1 is preferably used as a management program running on a computer that is the management target device. In the example illustrated in FIG. 4, three servers are each included in a domain A and a domain B and communication is available between the domain A and the domain B.

In a server 11 in the domain A, a virtual machine (VM) host program 21 is running that virtually implements an operating environment of another computer system. Furthermore, four VM guest programs 41 to 44 are running on the VM host program 21. Furthermore, in the server 11, an operation management program 31 is also running on top of the VM host program 21. The operation management program 31 running on the VM host program 21 allows the server 11 to function as a management device. The management target devices managed by the operation management program 31 are the server 11 itself, the VM host program 21, and the VM guest programs 41 to 44 running on the server 11.

Furthermore, in a server 12 in the domain A, an operating system (OS) 23 is running and an operation management program 32 is running on the OS 23. A switch 51 and a router 53 are connected to this server 12. The operation management program 32 running on the OS 23 in the server allows the server 12 to function as a management device. The management target devices managed by the operation management program 32 is the server 12 itself, the switch 51, and the router 53 connected to the server.

Furthermore, in a server 13 in the domain A, an operating system (OS) 24 is running and an operation management program 33 is running on the OS 24. Furthermore, storage 55 is connected to the server 13. The operation management program 33 running on the OS 24 in the server 13 allows the server 13 to function as a management device. The management target devices managed by the operation management program 33 are the server 13 itself and the storage 55 that is connected to the server 13.

Similarly to the domain A, for each of the three servers 14 to 16 included in a domain B, operation management programs 34 to 36 are running on a VM host program 22, an OS 25, and an OS 26 in the servers 14 to 16, respectively, and these allow each of the servers 14 to 16 to function as a management device. Accordingly, the servers 14 to 16, the various programs (VM host program 22, OSs 25 and 26, and VM guest programs 45 to 48) running on the servers, the hardware (a switch 52, a router 54, and storage 56) connected to one of the servers 14 to 16 are managed by the operation management program running on the corresponding server.

The operation management programs 31 to 36 on the servers 14 to 16, respectively, communicate with each other and form an overlay network. Furthermore, the operation management programs 31 to 36 can collect information on the other nodes in the domain to which a node belongs and create management information. Furthermore, the operation management programs 31 to 36 can be acquired from a terminal 1 accessible from both the domain A and the domain B.

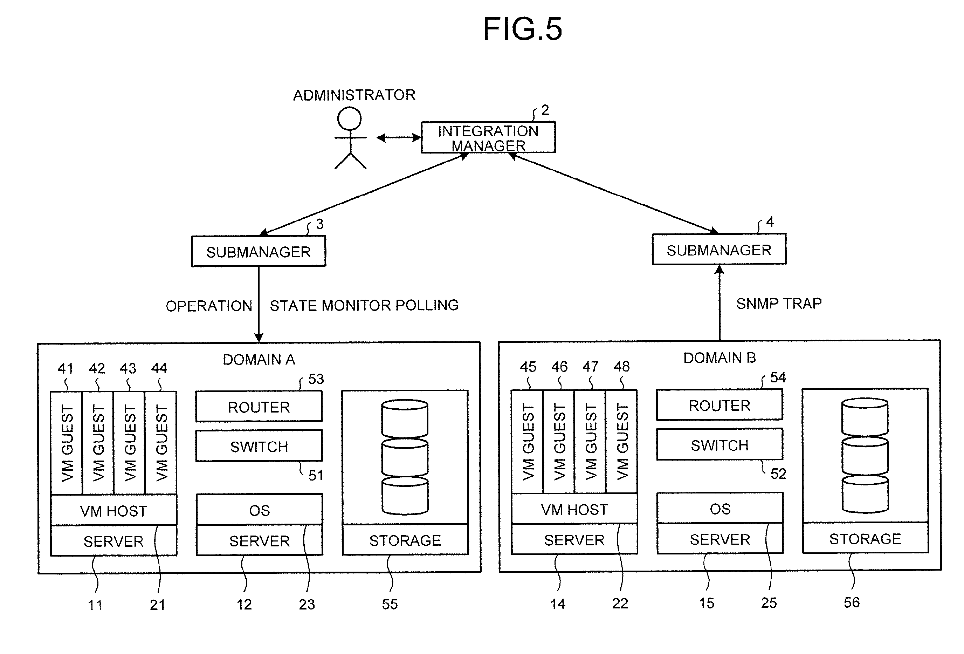

As illustrated in FIG. 4, the operation management programs 31 to 36 can automatically acquire information on a node belonging to its own domain without hierarchizing management. FIG. 5 is a schematic diagram of a comparative example with respect to FIG. 4 illustrating hierarchical management.

In the system illustrated in FIG. 5, a submanager 3 that manages the domain A and a submanager 4 that manages the domain B are arranged and an integration manager 2 manages these two submanagers 3 and 4.

The submanagers 3 and 4 perform a state monitor polling on devices belonging to a domain handled by that submanager by using an SNMP. Furthermore, the submanagers receive, from devices belonging to a domain handled by that submanager, an event, such as an SNMP trap, and collect information.

Specifically, with the configuration illustrated in FIG. 5, the domain A includes the servers 11 and 12, the switch 51, the router 53, and the storage 55. The VM host program 21 is running on the server 11 and the VM guest programs 41 to 44 are running on the VM host program 21. Similarly, the domain B includes the servers 14 and 15, the switch 52, the router 54, and the storage 56. The VM host program 22 is running on the server 14 and the VM guest programs 45 to 48 are running on the VM host program 15.

As described above, when management is hierarchized, devices or programs need to be deployed in each hierarchy respectively. Furthermore, because the load is concentrated on a particular manager, particularly on the integration manager 2, an expensive and high-performance server needs to be used for the integration manager 2. Furthermore, because the integration manager 2 becomes a single point of failure (SPOF), if the integration manager 2 fails, the entire system stops; therefore, in order to prevent a reduction of fault tolerance, integration manager 2 needs to be operated in a cluster configuration.

However, with the operation management programs 31 to 36 illustrated in FIG. 4, the same programs are distributed to the servers; therefore, there is no need to distinguish between an integration manager program and a submanager program. Furthermore, the management program runs on all the devices targeted for management without distinguishing between an integration manager computer and a submanager computer. Consequently, by preparing a backup for the manager and switching the management to the backup device when the manager stops, the loads of managing the network system can be distributed and thus it is possible to improve the scalability and the reliability of the system.

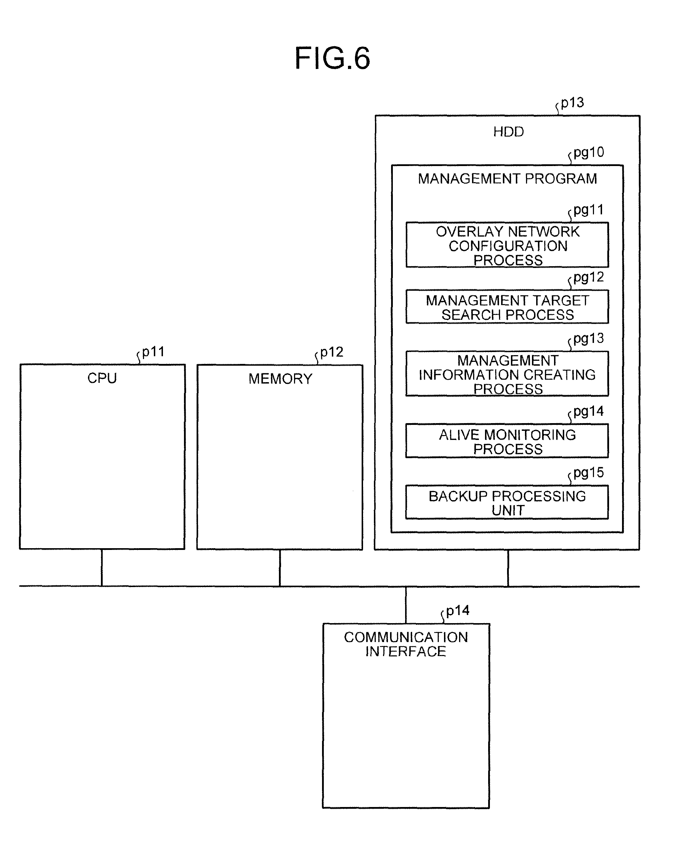

FIG. 6 is a schematic diagram illustrating the relationship between the hardware of a server and the management program. The management program pg10 is stored in a hard disk drive (HDD) p13. The management program pg10 includes an overlay network configuration process pg11 in which the operation of the overlay network forming unit is described, a management target search process pg12 in which the operation of the management target searching unit is described, a management information creating process pg13 in which the operation of the management information creating unit is described, an alive monitoring process pg14 in which the operation of the alive monitoring unit is described, and a backup processing unit pg15 in which the operation of the backup processing unit is described.

When the server boots up, the management program pg10 is read from the HDD p13 and is loaded in a memory p12. Then, a central processing unit (CPU) p11 executes in order the program loaded in the memory, thus allowing the server to function as a management device. At this point, a communication interface p14 of the server is used as an interface of the management device in the overlay network.

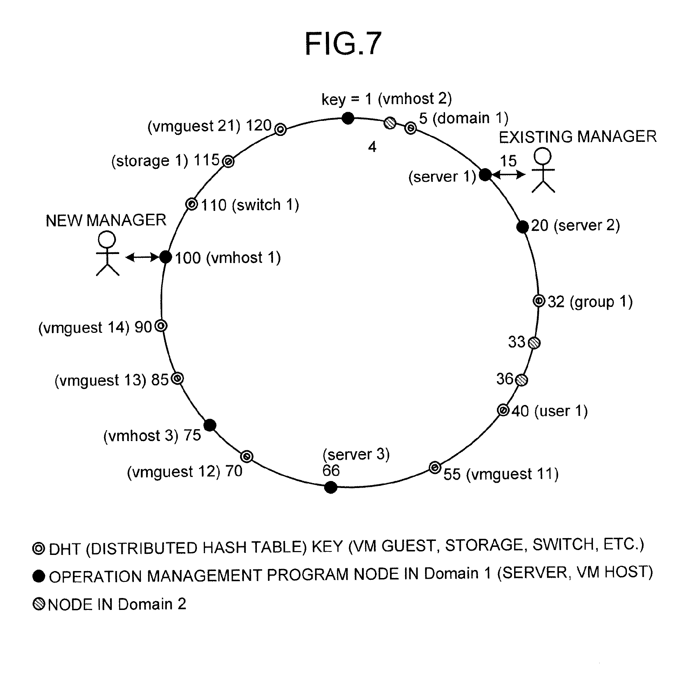

FIG. 7 is a schematic diagram illustrating an overlay network. After booting up, the management device or the management program forms an overlay network. For example, if the overlay network forming unit m11 uses a Chord algorithm with a distributed hash table (DHT), the ring-based overlay network illustrated in FIG. 7 is formed.

In the DHT, a pair made up of a Key and a Value is distributed and retained in each node that participates in the overlay network. In the Chord algorithm, a value hashed using a secure hash algorithm (SHA)-1 is used as a key. Each key is stored in a node that has a key value greater than the hashed key value and that is a first node in which the management program is running.

In the example illustrated in FIG. 7, the key of vmhost 2 is 1, the key of domain 1 is 5, the key of server 1 is 15, the key of server 2 is 20, the key of group 1 is 32, the key of user 1 is 40, and the key of vmguest 11 is 55. Similarly, the key of server 3 is 66, the key of vmguest 12 is 70, the key of vmhost 3 is 75, the key of vmguest 13 is 85, and the key of vmguest 14 is 90. Furthermore, the key of vmhost1 is 100, the key of switch 1 is 110, the key of storage 1 is 115, and the key of vmguest 21 is 120.

At this point, the vmhosts 1 to 3 and the servers 1 to 3 are nodes that belong to the domain 1 and are nodes in which a management program has been executed, all of which are represented by the black circle in FIG. 7. Furthermore, vmguest, storage, a switch, and the like that belong to the domain 1 are represented by the double circle in FIG. 7. Furthermore, in FIG. 7, the nodes (the nodes having a key of 4, 33, or 36) belonging to the domain 2 are represented by the shaded circle.

As described above, a pair made up of a key and a value is stored in a node that has a key value greater than the hashed key value and that is a first node in which a management program is running; therefore, the keys 40 and 55 are stored in a node whose key value is 66.

Furthermore, in the Chord algorithm, each node retains therein, as routing information, information on an immediately previous node, information on an immediately subsequent node, and information on a node given by (own node key+2^(x-1)) mod (2^k), where x is a natural number from 1 to k and k is the number of bits of a key. Specifically, each node has information on nodes scattered in this way: 1, 2, 4, 8, 16, 32, 64, and 128 ....

Accordingly, in the Chord DHT, each node can allow a node, which has a key whose value is greater than that of the key of an immediately previous node and appears for the first time after each node, to have a value associated with the key. Furthermore, each node can acquire the value that is associated with the key from the first node that has a key whose value is greater than that of the key.

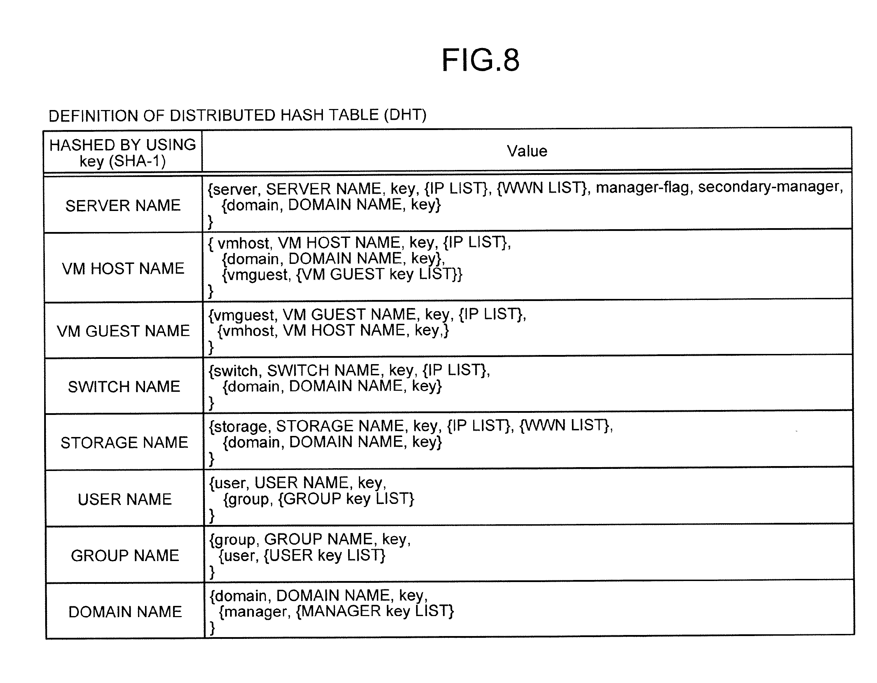

FIG. 8 is a table illustrating a specific example of a definition of a distributed hash table (DHT). This DHT corresponds to a hash table t1 in the SAN illustrated in FIG. 3.

FIG. 8 illustrates the key hashed using the SHA-1 and the value that is associated with the key.

For a server, the server name is hashed by using the SHA-1 and the result thereof is used as a key. The items contained as the values here include the tag "server" that indicates a server, the server name, the key obtained from the server name, the list of IP addresses contained in the server (IP list), the list of WWNs contained in the server (WWN list), the manager-flag indicating whether the server functions as a management node, the secondary-manager that is a flag indicating whether the server is registered as a backup node, the domain to which the server belongs, and the list of domain keys.

For a VM host, the VM host name is hashed by using the SHA-1 and the result thereof is used as a key. The items contained as the values here includes the tag "vmhost" that indicates a VM host, the VM host name, the key obtained from the VM host name, the IP list of the VM host, the domain to which the VM host belongs, the list of domain keys, and the list of VM guest running on the VM host.

For a VM guest, the VM guest name is hashed by using the SHA-1 and the result thereof is used as a key. The items contained as the values here includes the tag "vmguest" that indicates a VM host, the VM guest name, the key obtained from the VM guest name, the IP list of the VM guest, and the name and key of the VM host on which the VM guest is operating.

For a switch, the switch name is hashed by using the SHA-1 and the result thereof is used as a key. The items contained as the values here includes the tag "switch" that indicates a switch, the switch name, the key obtained from the switch name, the IP list of the switch, the domain to which the switch belongs, and the list of domain keys.

For storage, the storage name is hashed by using the SHA-1 and the result thereof is used as a key. The items contained as the values here includes the tag "storage" that indicates storage, the storage name, the key obtained from the storage name, the IP list of storage, the WWN list of storage, the domain to which the storage belongs, and the list of domain keys.

For a user, the user name is hashed by using the SHA-1 and the result thereof is used as a key. The items contained as the values here include the tag "user" that indicates a user, the user name, the key obtained from the user name, the group name to which the user belongs, and the list of group keys.

For a group, the group name is hashed by using the SHA-1 and the result thereof is used as a key. The items contained as the values here includes the tag "group" that indicates a group, the group name, the key obtained from the group name, the name of the user belonging to the group, and the list of user keys.

For a domain, the domain name is hashed by using the SHA-1 and the result thereof is used as a key. The items contained as the values here include the tag "domain" that indicates a domain, the domain name, the key obtained from the domain name, and the list of the keys of the management devices in the domain.

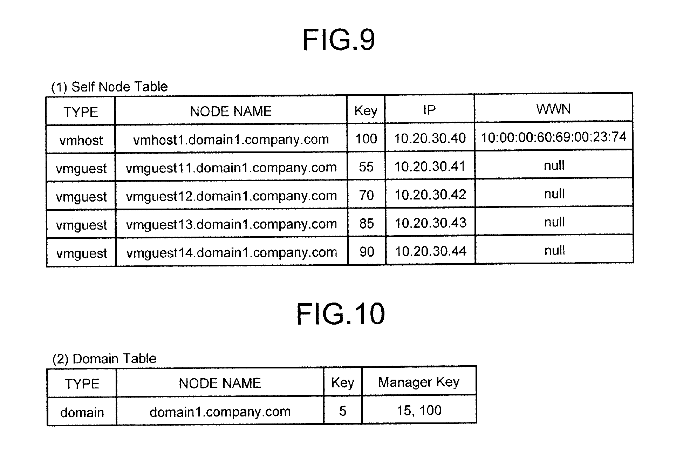

FIG. 9 is a table illustrating a specific example of a self node table t2 illustrated in FIG. 3. The self node table is a table in which information on a node on a server in which a management program is running, such as the server itself, a VM host running on the server, and a VM guest is registered. FIG. 9 illustrates a self node table that is created by the management program running on, in addition to the vmguests 11 to 14, the vmhost 1. The items contained in the self node table are the type, the node name, the key, the IP address, and the WWN.

In the example illustrated in FIG. 9, an entry is registered in which the type is vmhost, the node name is vmhost1.domain1.company.com, the key is 100, the IP address is 10.20.30.40, and the WWN is 10:00:00:60:69:00:23:74. Furthermore, an entry is registered, in which the type is vmguest, the node name is vmguest11.domain1.company.com, the key is 55, the IP address is 10.20.30.41, and the WWN is null.

Similarly, an entry is registered in which the type is vmguest, the node name is vmguest12.domain1.company.com, the key is 70, the IP address is 10.20.30.42, and the WWN is null. Furthermore, an entry is registered in which the type is vmguest, the node name is vmguest13.domain1.company.com, the key is 85, the IP address is 10.20.30.43, and the WWN is null. Furthermore, an entry is registered in which the type is vmguest, the node name is vmguest14.domain1.company.com, the key is 90, the IP address is 10.20.30.44, and the WWN is null.

FIG. 10 is a table illustrating a specific example of a domain table t3 that is illustrated in FIG. 3. Each of the management devices or the management programs obtains a key by hashing, using the SHA-1, the domain name of a domain to which a node belongs and then registers the obtained key in the domain table t3. Furthermore, in the domain table t3, in addition to the domain name and the keys of the domain, the key of the manager that manages the domain is registered. A node in which a management program is running can be managed by an arbitrary node as a manager and multiple managers may also be present in the domain.

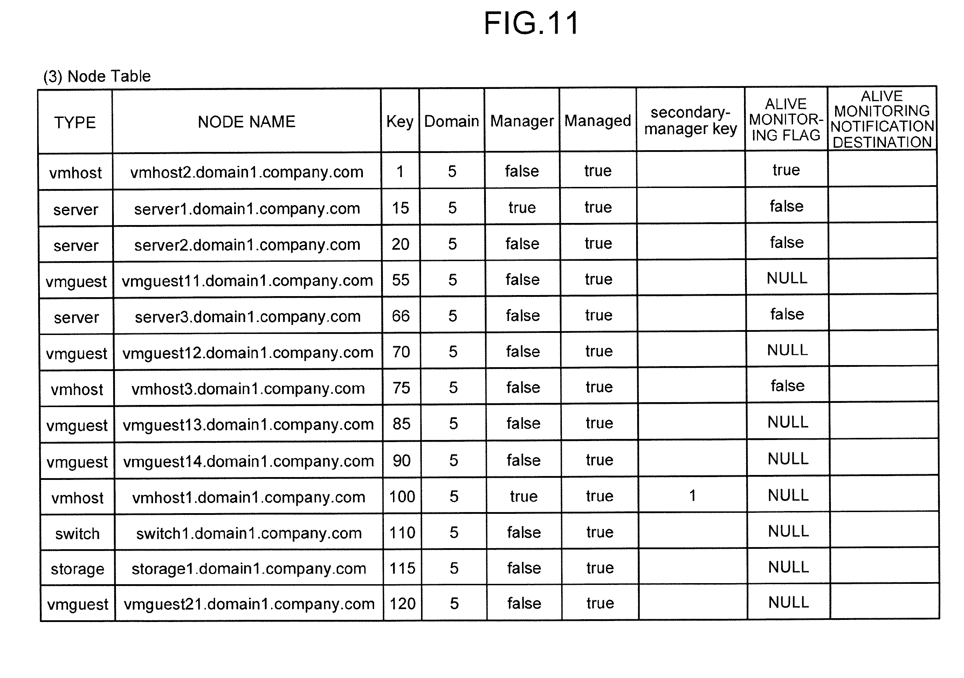

FIG. 11 is a table illustrating a specific example of a node management table t4 that is illustrated in FIG. 3. The node management table t4 contains management information created by the management program or the management device that acts as a manager that manages a node in a domain and is information on all the nodes belonging to the same domain as that of the node that acts as the manager.

The node management table t4 illustrated in FIG. 11 is a table created and retained by the manager (Key 100, vmhost 1) that manages the domain 1 in the overlay network illustrated in FIG. 7.

The node management table t4 illustrated in FIG. 11 includes items (columns) such as the type, the node name, the key, the Domain key, a Manager Flag, a Managed Flag, a secondary-manager Key, an alive monitoring flag, and an alive monitoring notification destination. The manager flag takes, as a value, true if the corresponding node is a manager and false if the corresponding node is not a manager. The managed flag takes, as a value, true if the corresponding node is being managed and false if the corresponding node is not being managed. The secondary-manager Key indicates the Key of a backup node with respect to a target node. The alive monitoring flag takes, as a value, true for a node that is to be monitored, false for a node that is not to be monitored, and NULL for a node that is excluded from the monitoring target. The item in the alive monitoring notification destination indicates, when a node acts as a monitoring node, the key of the notification destination to which the result of the monitoring of the node is sent.

Specifically, the node management table t4 illustrated in FIG. 11 has an entry in which the type is vmhost, the node name is vmhost2.domain1.company.com, the Key is 1, the Domain Key is 5, the Manager Flag is false, the Managed Flag is true, the secondary-manager Key is blank, the alive monitoring flag is true, and the alive monitoring notification destination is blank.

Furthermore, the node management table t4 has an entry in which the type is a server, the node name is server 1.domain1.company.com, the Key is 15, the Domain Key is 5, the Manager Flag is true, the Managed Flag is true, the alive monitoring flag is false, the secondary-manager Key is blank, and the alive monitoring notification destination is blank.

Furthermore, the node management table t4 has an entry in which the type is a server, the node name is server2.domain1.company.com, the Key is 20, the Domain Key is 5, the Manager Flag is false, the Managed Flag is true, the secondary-manager Key is blank, the alive monitoring flag is false, and alive monitoring notification destination is blank.

Furthermore, the node management table t4 has an entry in which the type is vmguest, the node name is vmguest11.domain1.company.com, the Key is 55, the Domain Key is 5, the Manager Flag is false, the Managed Flag is true, the secondary-manager Key is blank, the alive monitoring flag is NULL, and the alive monitoring notification destination is blank.

Furthermore, the node management table t4 has an entry in which the type is a server, the node name is server3.domain1.company.com, the Key is 66, the Domain Key is 5, the Manager Flag is false, the Managed Flag is true, the secondary-manager Key is blank, the alive monitoring flag is false, and the alive monitoring notification destination is blank.

Furthermore, the node management table t4 has an entry in which the type is vmguest, the node name is vmguest12.domain1.company.com, the Key is 70, the Domain Key is 5, the Manager Flag is false, the Managed Flag is true, the secondary-manager Key is blank, the alive monitoring flag is NULL, and the alive monitoring notification destination is blank.

Furthermore, the node management table t4 has an entry in which the type is vmhost, the node name is vmhost3.domain1.company.com, the Key is 75, the Domain Key is 5, the Manager Flag is false, the Managed Flag is true, the secondary-manager Key is blank, the alive monitoring flag is false, and the alive monitoring notification destination is blank.

Furthermore, the node management table t4 has an entry in which the type is vmguest, the node name is vmguest13.domain1.company.com, the Key is 85, the Domain Key is 5, the Manager Flag is false, the Managed Flag is true, the secondary-manager Key is blank, the alive monitoring flag is NULL, and the alive monitoring notification destination is blank.

Furthermore, the node management table t4 has an entry in which the type is vmguest, the node name is vmguest14.domain1.company.com, the Key is 90, the Domain Key is 5, the Manager Flag is false, the Managed Flag is true, the secondary-manager Key is blank, the alive monitoring flag is NULL, and the alive monitoring notification destination is blank.

Furthermore, the node management table t4 has an entry in which the type is vmhost, the node name is vmhost1.domain1.company.com, the Key is 100, the Domain Key is 5, the Manager Flag is true, the Managed Flag is true, the secondary-manager Key is 1, the alive monitoring flag is NULL, and the alive monitoring notification destination is blank.

Furthermore, the node management table t4 has an entry in which the type is a switch, the node name is switch1.domain1.company.com, the Key is 110, the Domain Key is 5, the Manager Flag is false, the Managed Flag is true, the secondary-manager Key is blank, the alive monitoring flag is NULL, and the alive monitoring notification destination is blank.

Furthermore, the node management table t4 has an entry in which the type is a storage, the node name is storage1.domain1.company.com, the Key is 115, the Domain Key is 5, the Manager Flag is false, the Managed Flag is true, the secondary-manager Key is blank, the alive monitoring flag is NULL, and the alive monitoring notification destination is blank.

Furthermore, the node management table t4 has an entry in which the type is vmguest, the node name is vmguest21.domain1.company.com, the Key is 120, the Domain Key is 5, the Manager Flag is false, the Managed Flag is true, the secondary-manager Key is blank, the alive monitoring flag is NULL, and the alive monitoring notification destination is blank.

In FIG. 11, the node at (Key 1, vmhost 2) is monitored and the node at (Key 1, vmhost 2) is used as a backup node for the node at (Key 100, vmhost 1). Consequently, if the node at (Key 100, vmhost 1) stops, the management is switched from the node at (Key 100, vmhost 1) to the node at (Key 1, vmhost 2). Furthermore, if the node at (Key 1, vmhost 2) stops, the node at (Key 100, vmhost 1) selects a new backup node.

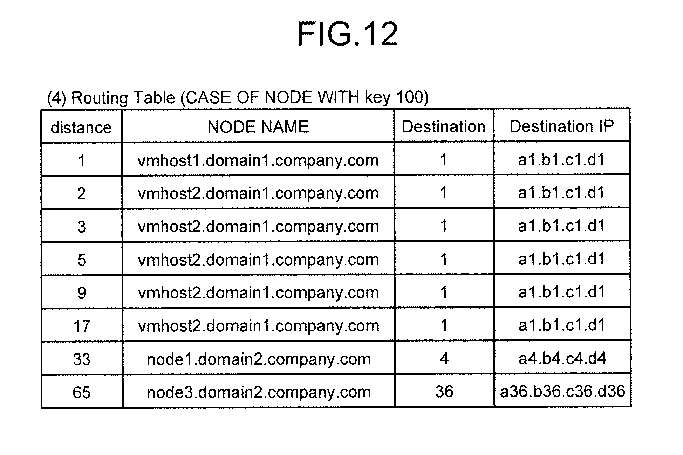

FIG. 12 is a table illustrating a specific example of a routing table t5 illustrated in FIG. 3. The routing table t5 is a table that is used by each management device or management program for the routing in the overlay network.

In the example illustrated in FIG. 12, the routing table t5 contains items, such as the distance that is indicated by the key of the final destination, the node name of the destination, the destination key that is the routing destination key used when communicating with the destination, and destination IP that is the IP address of the routing destination.

FIG. 12 is a table illustrating a specific example of a routing table used by the node that has the key of 100. The routing table t5 illustrated in FIG. 11 contains items in which the distance is 1, the node name is vmhost1.domain1.company.com, the Destination Key is 1, the Destination IP is a1.b1.c1.d1, the distance is 2, the node name is vmhost2.domain1.company.com, the Destination Key is 1, and the Destination IP is a1.b1.c1.d1.

Furthermore, the routing table t5 contains items in which the distance is 3, the node name is vmhost2.domain1.company.com, the Destination Key is 1, and the Destination IP is a1.b1.c1.d1.

Furthermore, the routing table t5 contains items in which the distance is 5, the node name is vmhost2.domain1.company.com, the Destination Key is 1, and the Destination IP is a1.b1.c1.d1.

Furthermore, the routing table t5 contains items in which the distance is 9, the node name is vmhost2.domain1.company.com, the Destination Key is 1, and the Destination IP is a1.b1.c1.d1.

Furthermore, the routing table t5 contains items in which the distance is 17, the node name is vmhost2.domain1.company.com, the Destination Key is 1, and the Destination IP is a1.b1.c1.d1.

Furthermore, the routing table t5 contains items in which the distance is 33, the node name is node1.domain2.company.com, the Destination Key is 4, and the Destination IP is a4.b4.c4.d4.

Furthermore, the routing table t5 contains items in which the distance is 65, the node name is node3.domain2.company.com, the Destination Key is 36, and the Destination IP is a36.b36.c36.d36.

As described above, if nodes (key: 1, 2, 3, 5, 9, and 17) belonging to the domain 1 are the destinations, the routing table t5 specifies that the nodes are routed to the Key 1 (IP address: a1.b1.c1.d1). Furthermore, if the node key 33 belonging to the domain 1 is the destination, the routing table t5 specifies that the node is routed to the key 4, whose IP address is a4.b4.c4.d4, and, if the node key of 65 belonging to the domain 2 is the destination, the routing table t5 specifies that the node is routed to the key 36, whose IP address is a36.b36.c36.d36.

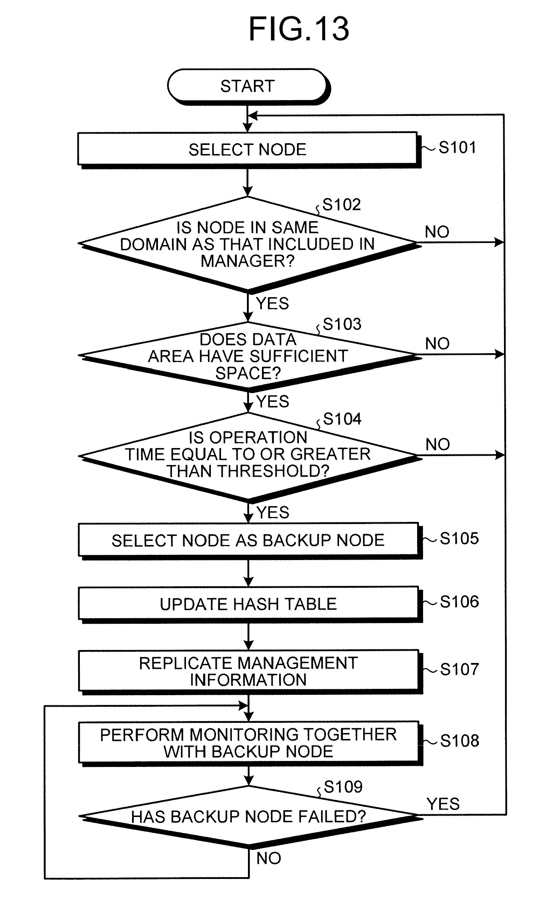

FIG. 13 is a flowchart illustrating the flow of the operation of a process performed by a backup processing unit m40. The node selecting unit m41 selects one node in the overlay network (Step S101) and determines whether the selected node is in the same domain as that included in the manager (Step S102).

If the selected node is in the same domain as that included in the manager (Yes at Step S102), the node selecting unit m41 determines whether the data area of the selected node has sufficient space (Step S103).

If the data area of the selected node has sufficient space (Yes at Step S103) the node selecting unit m41 determines whether the operation time of the selected node is equal to or greater than a threshold, i.e., whether the selected node is continuously operated during a time period that is equal to or greater than the threshold (Step S104).

If the operation time of the selected node is equal to or greater than the threshold (Yes at Step S104), the node selecting unit m41 uses the selected node as a backup node (Step S105). If the selected node is not in the same domain as that included in the manager (No at Step S102), if the data area of the selected node does not have sufficient space (No at Step S103), and if the operation time is less than the threshold (No at Step S104), the node selecting unit m41 returns to Step S101 and selects a node again. Specifically, the node selecting unit m41 checks the nodes in the order of, for example, Key 1, 15, and 20.

After a backup node is determined (Step S105), the node selecting unit m41 updates the hash table t1 (Step S106) and replicates the node management table t4, i.e., the management information, to the backup node (Step S107).

The alive monitoring unit m30 starts alive monitoring together with the backup node (Step S108). If the backup node fails (Yes at Step S109), the alive monitoring unit m30 returns to Step S101 and selects a new backup node.

If the backup node detects that the management node has failed, the switching unit m43 in the backup node automatically switches the management task. If the failed management node is recovered, the management task is switched back from the backup node and is restored to the management node.

In the process illustrated in FIG. 13, if no node whose operation time is equal to or greater than the threshold exists, a node having a longer operation time than that of the other nodes is used as a backup node. If a node whose operation time is less than the threshold is used as a backup node, it may also be possible to use, for example, the top two nodes having the longest operation times as backup nodes. By arranging multiple backup nodes, even if one of the backup nodes stops, the other backup node can be used; therefore, reliability can be improved.

Furthermore, if a management node has failed and the management task has been switched to a backup node, the backup node further selects another backup node as the backup node. Then, if the original management node is not recovered after a predetermined time period since the backup node inherited the management task, the backup node is promoted to a management manager and the backup node for the original backup node is promoted to a backup node. Consequently, after a predetermined time has elapsed, the node that was the backup node acts as a management node regardless of whether the original management node is recovered.

As described above, the management device, the management method, and the management program according to the embodiment selects, from nodes in an overlay network, a backup node for a management node by using the management range to which the node belongs, the volume of data, and the operation time as an index. Then, management information is replicated to the backup node and, if the management node stops, the backup node is switched to the management node. Consequently, it is possible to distribute the loads of managing the network systems and to improve scalability and reliability.

### Reference Signs List

- N1 to N4: node
- m1: management device
- m11: overlay network forming unit
- m12: management target searching unit
- m13: management information creating unit
- m21: communication processing unit
- m22: hash processing unit
- m23: information acquiring unit
- m24: notifying unit
- m30: alive monitoring unit
- m31: subscription applying unit
- m32: monitor requesting unit
- m33: monitoring unit
- m34: determining unit
- m40: backup processing unit
- m41: node selecting unit
- m42: data replicating unit
- m43: switching unit
- t1: hash table
- t2: self node table
- t3: domain table
- t4: node management table
- t5: routing table
- p11: CPU
- p12: memory
- p13: HDD
- p14: communication interface
- pg10: management program
- pg11: overlay network forming process
- pg12: management target search process
- pg13: management information creating process
- pg14: alive monitoring process
- pg15: backup processing process

## Claims

1. A management device comprising:
a node selecting unit that selects a backup node for a management node, from a plurality of nodes in a network formed from a plurality of networks by a specific rule based on multiple indexes that include at least one of the management range to which the node belongs to, the volume of data, and an operation time;
a replicating unit that replicates management information to the backup node; and
a switching unit that switches, when the management node stops, the backup node to the management node.

2. The management device according to claim 1, wherein, when no node exists whose operation time satisfies a threshold, the node selecting unit selects more than one node whose operation time is longer than the other nodes as the backup node.

3. The management device according to claim 1, wherein, when the original management node is restored within a predetermined time after the switching, the node that was switched from the backup node to the management node by the switching unit returns the original management node to the management node and, after the predetermined time has elapsed, operates as the management node regardless of whether the management node has been restored.

4. The management device according to claim 2, wherein the node that was switched from the backup node to the management node by the switching unit selects a backup node for itself.

5. A management method comprising:
selecting a backup node for a management node, from a plurality of nodes in a network formed from a plurality of networks by a specific rule based on multiple indexes that include at least one of the management range to which the node belongs to, the volume of data, and an operation time;
replicating management information to the backup node; and
switching, when the management node stops, the backup node to the management node.

6. A management program that causes a computer to execute a process comprising:
selecting a backup node for a management node, from a plurality of nodes in a network formed from a plurality of networks by a specific rule based on multiple indexes that include at least one of the management range to which the node belongs to, the volume of data, and an operation time;
replicating management information to the backup node; and
switching, when the management node stops, the backup node to the management node.
